# EUROPEAN PATENT APPLICATION

(11) **EP 3 594 867 A1**
(43) Date of publication of application: **15.01.2020**
(21) Application number: 18182406.1
(22) Date of filing: 09.07.2018
(51) Int. Cl.: G06Q 10/00

(54) **SMART SERVICE CONTRACTS FOR ASSET HEALTH SERVICES**

(71) Applicant: ABB Schweiz AG, 5400 Baden (CH)
(72) Inventor: LOCHER, Thomas, 8050 Zürich (CH); OBERMEIER, Sebastian, 5405 Baden Daettwil (CH); PIGNOLET, Yvonne-Anne, 5400 Baden (CH)
(74) Representative: Vossius & Partner Patentanwälte Rechtsanwälte mbB

(57) **Abstract**

The present invention relates to a system and method for monitoring the status of at least one device (5) of an asset, initiating a service action for said at least one device (5) and recording said status and service action electronically, the method comprising the steps: defining conditions (3) of the device (5) which trigger a service action in a smart contract; encoding (13) these conditions and said smart contract in a blockchain (100); transmitting (10) measured parameters of the device (5) to the blockchain (100); initiating appropriate service action which is defined in said smart contract in case the condition is met; and storing a result of the service action in said blockchain (100).

## Description

### FIELD OF THE INVENTION

The invention relates to a method for monitoring the status of at least one device and initiating and monitoring service actions for said at least one device in a novel way which is reproducible, safe and not manipulable. The invention also relates to a corresponding system and computer program product for monitoring the status of the at least one device and planned and executed service actions for said at least one device. The at least one device is preferably part of an asset with a plurality devices such that the health of an asset with a plurality of devices is manageable with the method and system of the invention. The method and system of the invention further provides the possibility to monitor, record and/or initialize additional tasks in a reproducible, safe and unmanipulable manner.

### BACKGROUND OF THE INVENTION

The service and asset (health) management business is becoming increasingly important. Nowadays, if a company/provider and a customer/user engage in a service contract, e.g., a device maintenance contract, the two parties must agree on the contractual terms. Moreover, a mechanism must be in place that allows the user or the company to monitor the operation of the device(s) covered by the service contract in order to determine whether and when service is needed. If the provider detects that service of a device is required, e.g., based on some measured conditions, agreement with the user must be reached as to when and if the suggested service is performed. After a service engineer has performed its task, the user must confirm that the work was carried out as expected. Lastly, an invoice in the amount specified in the service contract for this type of labor is sent to the user.

Contracts for services, e.g. maintenance services, and their execution involve many parties on both the provider and user side to ensure that the correct service is provided at the appropriate time. Moreover, the history of services of a device is very important and has to be recorded completely and correctly and manipulation of the service history has to be prevented.

There is a need for a method and system for monitoring and recording process flow in a reliable, reproducible and convenient way.

### SUMMARY

It is an object of the invention to provide improved methods and systems for streamlining the service process flow, particularly monitoring, planning, initiating, executing and/or recording such service process flow more efficiently than those known from the prior art. It is a further object to provide improved methods and systems that provide secured recording of the actions in a service flow process, wherein ex post manipulation is prevented. In particular, it is an object to provide an improved mechanism for asset health services, e.g., for managing the health of a plurality of devices.

Asset health management (AHM) is the field of study which looks at how to manage the "health" of an asset or assets. This often includes methods to establish asset health and effort to decide the appropriate actions to be taken to manage the assets' health. This also includes the discussion of health at the end of life to ensure the asset's full life is used efficiently. For instance, an asset can comprise a plurality of similar and/or different devices whose health has to be monitored and appropriate service actions have to be taken to maintain functionality of the entire asset.

The objects of the invention are achieved by the features of the independent claims. Further preferred embodiments of the present invention are further specified in the dependent claims.

In particular, according to the present invention, a blockchain-based mechanism is used for asset health management. A blockchain (also called "block chain") is a continuously growing list of records, called blocks, which are linked and secured using cryptography. Each block typically contains a cryptographic hash of the previous block, a timestamp, and transaction data. By design, a blockchain is resistant to modification of the data. It is an open, distributed ledger that can record transactions between two parties efficiently and in a verifiable and permanent way. For use as a distributed ledger, a blockchain is typically managed by a peer-to-peer network collectively adhering to a protocol for inter-node communication and validating new blocks. Once recorded, the data in any given block cannot be altered retroactively without alteration of all subsequent blocks, which requires consensus of the network majority. Blockchains are secure by design and exemplify a distributed computing system. Decentralized consensus has therefore been achieved with a blockchain. This makes blockchains potentially suitable for the recording of events, medical records, and other activities, such as "Identity management", "Transaction processing", documenting provenance, and, as noted by the present inventors, asset health management. Preferred advantages of a blockchain-based approach of the present invention will be apparent in the following. For instance, a blockchain decentralizes trust and enables direct and transparent interactions. The blockchain-based approach is further combined with a smart contract based approach, which supports and automates the servicing workflow.

In particular, when a service contract is executed directly as a so-called "smart contract", a piece of code that precisely captures the service contract terms, in a distributed manner, each party can be sure that servicing is carried out exactly when needed and that service work was performed as specified in a largely automated fashion. Thus, the method and system according to the invention provides at least the following benefits. Less manual interaction is involved on user and provider side, which results, i.a., in a lower personal workload, faster actions, less erroneous and less needless actions and substantially lower costs. Thus, fast and correct execution of a service and preferably reproducible feedback is achieved.

The strict rules of a smart contract, which are determined when setting up the service agreement, precisely define the terms when maintenance work is needed, what kind of maintenance work is needed and under what conditions maintenance work has been completed successfully.

A plurality of preferred aspects of the present invention can be briefly summarized as follows.

According to a first aspect, the invention is directed to a method for monitoring the status of at least one device of an asset, initiating a service action for said at least one device and/or recording the status and/or said service action electronically. The method comprises at least one of the following steps. First, conditions or terms of the at least one device are defined that trigger any actions to be performed. For instance, such defined conditions may be service actions to be performed. Said conditions, trigger and actions are preferably defined and stored in a smart contract, wherein said smart contract is preferably encoded in a blockchain. Measured parameters of the at least one device are transmitting to the blockchain and preferably also stored in said blockchain. The transmission may be controlled by an additional controller, may be regularly or randomly executed or scheduled on the basis of a scheduler. According to a further aspect, the transmission of the parameters may depend on the value of measured parameter itself, e.g., depending if the measured parameter is within a specific range, above or below a certain threshold. The smart contract compares the received measured parameters with the defined conditions and triggers and initiates an appropriate service action as defined in the smart contract. Finally, the result of the service action is stored in said blockchain.

Preferably, a trigger initiates the appropriate service action if the measurement parameter is below or above a defined threshold as defined in the conditions. Additionally or alternatively, time information can be used as a parameter for a trigger. For instance, if the last service action was performed more than a certain time period ago, e.g., more than one year.

The blockchain is preferably hosted on a dedicated hardware, preferably on a plurality of dedicated hosts which are preferably operated by different parties. For instance, it is preferred that four or more hosts are provided to reach consensus in a distributed manner if one host may misbehave. In order to be able to cope with a larger number of malicious hosts, a larger total number of hosts is preferred or even required. More specifically, if x hosts are malicious, there must be 2x+1 good hosts.

The method of the invention is preferably used for a plurality of devices which are part of an asset of a customer to manage the health of said plurality of devices of the asset. The method of the invention may be used for a wide range of different devices. For instance, the device may be a breaker, switch gear, robot, or an entire substation and the service action is a maintenance service.

The service action(s) as preferably defined in the smart contract is/are preferably executed by the device itself, e.g., calibration may be executed by the device itself with or without further information from outside. Additionally or alternatively, for performing a service action additional hardware might be required, preferably hardware which is adapted to perform such a service action. Moreover, the service action is initiated by submitting detailed information to a technician which will finally perform the service action. For instance, replacing a seal or an isolator cannot be performed by the device itself but requires a technician. The smart contract of the blockchain, however, could initiate and help to coordinate specific details how and which seal has to be replaced. Such an order might be provided in the form of a notification which is transmitted to a service technician, preferably via email or SMS, etc. Said notification may comprises detailed information what kind of service action is needed.

Additional conditions or terms can be stored in the smart contract, e.g., further actions which are preferably initiated after a finished service action. For instance, a status notification may be transmitted to a user, provider and/or technician. Further, a notification for a billing action may be transmitted to the previously determined receiver or the billing action is initiated and/or executed by the smart contract itself.

The method of the present invention is preferably executed by a computer. Moreover, the invention is also directed to a computer program comprising instructions which, when the program is executed by a computer, cause the computer to carry out the method of any of the preceding claims.

Finally, the present invention also relates to a system for monitoring the status of at least one device of an asset, initiating a service action for said at least one device and recording said status and said service action, with a method of any of the preceding claims, wherein the system comprises a plurality for hosting the blockchain.

The present invention also relates to the computer-implemented control for asset health management, preferably asset health service. The combination of a blockchain based approach with a smart contract approach, which can both be implemented as a computer program, provides a new improved method for carrying out asset health management. The present invention is particularly beneficial in situations where a plurality of devices of an asset is distributed and the health of said devices has to be monitored and maintained. The present invention provides not only a mechanism for monitoring, determining and responding to measured parameters of devices which serve as triggers for actions, preferably service actions, but also makes it possible to implement triggers for additional actions, e.g., advice, alarms or even billing for the services.

### BRIEF DESCRIPTION OF THE DRAWING

The subject-matter of the invention will be explained in more detail with reference to the preferred exemplary embodiment which is illustrated in the attached drawing, in which:

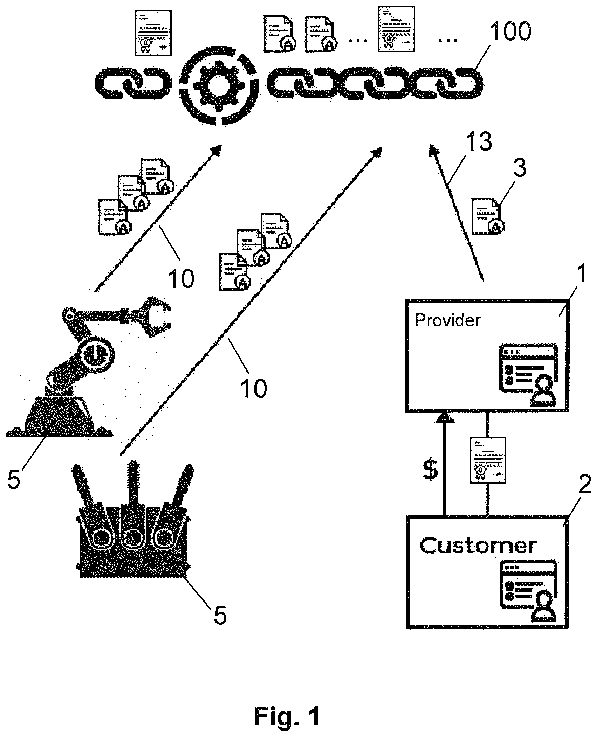

- Fig 1: is an illustration with a plurality of devices of an asset which send health status measurements to a blockchain; a smart contract for the asset can trigger maintenance work for the individual devices of the asset.

### DETAILED DESCRIPTION OF EMBODIMENTS

Exemplary embodiments of the invention will be described with reference to the drawing. A first preferred embodiment of the invention is illustrated in Fig. 1. A user or customer 2 with an asset of a plurality of devices 5 has a deal with a service provider 1, which provides service to said devices 5. As usual, the customer pays for such a service (see $ in Fig. 1).

Typically, the device 5 comprises sensors and or counters which could be used as indicators of the health of a device. For instance, the temperature, pressure, humidity, voltage, current etc. are measured, wherein these parameters can be used to determine the present status or the expected status of the device in the future. For instance, if the temperature is below or above certain thresholds, a new calibration or other maintenance might be required. Also counters or clocks within the device may be used for the determination of the current health status and/or an expected health status of the device. The status of the devices 5 may be monitored automatically or manually, e.g., by transmitting automatically measurement parameters of sensors or counters from the devices to a central unit and/or by requesting for individual measurement parameters from said central unit. Said central unit is not necessarily a single physical unit and can be provided by a plurality of physically independent components. The term "unit" rather should emphasise that the unit relates to a logical unit.

According to the invention, parameters are transmitted to the blockchain 100 and recorded in the blockchain. The blockchain may be executed on a host or computer. In order to provide the advantage of the decentralized trust of the blockchain it is preferred that the blockchain is distributed over a plurality of hosts. Preferably, said hosts are connected by a peer-to-peer network. According to the present invention, it is further preferred when a dedicated hardware is provided for the blockchain which enhances efficiency, security and reliability. For instance, the provider 1 and the service customer or user 2 - and potentially additional parties (not illustrated in Fig. 1) - provide dedicated hardware (not illustrated in Fig. 1) to host and run nodes of a shared blockchain 100.

It is preferred that multiple parties (at least two, preferably more) are involved as this enables the "distribution of trust" to many entities. According to this embodiment, any attempts by a single party or a small number of colluding parties to manipulate the system will be thwarted, i.e., the distributed execution of the blockchain 100 ensures correctness and consistency.

If a customer 2 wants to set up a service contract 21, the terms of the contract are captured precisely, e.g., maintenance work is needed when a device 5 has been restarted a certain number of times, or some device status metric exceeds or undershoots a pre-defined threshold. The terms or conditions are encoded in a smart contract 3 which is hosted 13 on the blockchain 100. As known in the art, a smart contract is a computer program that captures the terms of agreement directly in the program code. Smart contracts permit the trusted execution of transactions in a distributed system without centralized trust. These transactions are trackable and irreversible. Many kinds of contractual clauses may be made partially or fully self-executing, self-enforcing, or both. The aim of smart contracts is to provide security that is superior to traditional contract law and to reduce other transaction costs associated with contracting.

At least some of the devices 5 of the asset which are covered by the (smart) service contract, e.g., transformers, breakers, switch gear, robots, or entire systems (such as a substation) are preferably equipped with sensors and/or counters that reliably measure parameters or metrics that can be used to determine the status of each device. Moreover, the individual sensor also enables the monitoring of the status of parts of the device 5 and to determine whether maintenance or service work of the device 5 or part(s) of the device 5 are needed. Preferably, at least one device 5 periodically or based on a previously determined pattern transmits such measurements to the blockchain 100, where the measurements 10 are stored in blocks of the blockchain.

Preferably, the reception of a set of measurements triggers the smart (service) contract for this particular customer 2, to determine if a condition for maintenance work for the at least one device 5 has been reached. For instance, if it is noted that the device is running for a specific time, e.g., one year, this may trigger a routine inspection. According to another example, a specific measurement of a sensor exceeds a threshold which may also trigger a service action, e.g., new calibration of said sensor is required or comparing said sensor output with other sensor outputs is suggested. The present invention is not restricted to particular measurements and corresponding service actions. Rather, the present invention provides a reliable framework (provided by using a blockchain approach) for efficient planning, initiating and execution service actions (provided by using the smart contract).

Based on the status of the device 5 or a plurality of devices 5, the smart contract 3 may initiate service maintenance for the device(s) 5 that requires maintenance. Said maintenance may be performed automatically, e.g., by analysis of the measured parameters and executing the necessary service action, e.g., calibration. According to another embodiment, part of the service action may require a service technician, e.g., replacement of a spare part. In this embodiment, a notification to contact a service technician or a direct notification of a respective service technician, e.g., by email, SMS or other messaging service may be part of the smart contract. Thus, all service actions that do not require to be executed by a service technician can be part of the smart contract. In other words, it is preferred that also the kind of service action is determined in the smart contract and the service technician is instructed which kind of maintenance work is needed. Still in other words, the smart contract may issue a request to dispatch a service technician to the corresponding customer of the device, with operating instructions for the service technician. A service technician could either be dispatched automatically or an operator at the provider receives the request to dispatch a technician once the customer has agreed to receive the service technician.

Once maintenance work is completed, it is preferably electronically signed by a technician and/or the device owner that the work at the device 5 has been carried out; this information is preferably stored in the blockchain 100 and may trigger the execution of a smart contract, e.g., to inform other devices, to store said information in other files and/or to bill the customer.

Alternatively or additionally, also the customer could sign electronically that the work has been carried out; this information is preferably stored in the blockchain 100 as well. Moreover, a smart contract can determine that the measured parameters are again in the desired ranges. Thus, a smart contract may determine that maintenance work has been carried out successfully, may record this information, and/or may trigger payments or payment requests. These processes provide the preferred advantage that certain manual steps are eliminated. Such automation steps are, however, an option and may not always be desired, e.g., it should to be specified in the smart contract what to do when the measurements automatically go back to the desired ranges or even oscillate between good and bad ranges occurs (oscillation itself may be a strong indicator that maintenance is needed).

Once the blockchain 100 receives 10 this information, or, alternatively, when the latest measurements indicate that the device 5 functions normally again, the smart contract triggers corresponding action, e.g. a notification such as an "everything ok" message. The blockchain 100 may also trigger additional actions related to the service action but not service actions itself. For instance, the smart contract may initiate and/or execute further notifications to the provider and/or user. The smart contract may also initiate or issue a billing or payment action, e.g., the customer may be billed directly for the amount specified for this type of work in the smart contract or information about the amount that the customer owes is sent to the provider, which can then issue an invoice in this amount to the customer.

As will be appreciated by a person skilled in the art, the degree of automation of the present method can be tuned almost arbitrarily. Instead of triggering actions automatically, a request or notification for an action can be sent to the responsible party or parties. The parties can then decide themselves whether they want to carry out the proposed action (e.g., contacting the customer because a device appears to require maintenance, dispatching a service technician, or sending a bill to a customer).

While exemplary embodiments have been explained with reference to the drawing, modifications and alterations may be implemented in other embodiments. The methods, devices, and systems may be used for a plurality of technical fields, without being limited thereto.

As will be understood by the skilled person, the embodiments disclosed herein are provided for better understanding and are merely exemplary. Various possible modifications and alterations will be obvious to the skilled person without deviating from the scope of the invention as defined by the claims.

## Claims

1. A method for monitoring the status of at least one device (5) of an asset, initiating a service action for said at least one device (5) and recording said status and service action electronically, the method comprising the steps:
defining conditions (3) of the device (5), trigger and service actions in a smart contract;
encoding (13) said smart contract (3) with the conditions and in a blockchain (100);
transmitting (10) measured parameters of the at least one device (5) to the blockchain (100);
wherein said smart contract compares the measured parameters with the defined conditions and trigger and initiates appropriate service action as defined in the smart contract (3); and
storing a result of the service action in said blockchain (100).

2. The method of claim 1, wherein a trigger initiates the appropriate service action in case the measurement parameter is below or above a defined threshold as defined in the conditions.

3. The method according to any of the preceding claims, wherein the blockchain (100) is hosted on a dedicated hardware, preferably on a plurality of dedicated hosts which are preferably operated by different parties.

4. The method according to any of the preceding claims, wherein the method is used for a plurality of devices (5) which are part of an asset of a customer to manage the health of said plurality of devices (5) of the asset.

5. The method according to any of the preceding claims, wherein the device (5) is a breaker, switch gear, robot, or an entire substation and the service action is a maintenance service.

6. The method according to any of the preceding claims, wherein the service action is executed by the device (5) itself or an additional hardware, which is adapted to perform such a service action.

7. The method according to any of the preceding claims, wherein the service action is initiated by notifying a service technician, preferably via email or SMS.

8. The method according to claim 7, wherein the notification further comprises detailed information what kind of service action is needed.

9. The method according to any of the preceding claims, wherein further actions after said service action are initiated, preferably sending a status notification to a user, provider and/or technician or notifying or executing a billing action.

10. A method carried out by a computer comprising steps according to any of the preceding claims.

11. A computer program comprising instructions which, when the program is executed by a computer, cause the computer to carry out the method of any of the preceding claims.

12. A system for monitoring the status of at least one device (5) of an asset, initiating a service action for said at least one device (5) and recording said status and said service action, with a method of any of the preceding claims, wherein the system comprises a plurality for hosting the blockchain (100).
